# EUROPEAN PATENT APPLICATION

(11) **EP 2 312 080 A2**
(43) Date of publication of application: **20.04.2011**
(21) Application number: 10013735.5
(22) Date of filing: 18.10.2010
(51) Int. Cl.: E04D 13/00, H01L 31/042

(54) **Structure support tool, structure installing method and solar cell module system using the structure support tool**

(30) Priority: 19.10.2009 JP 2009240238
(71) Applicant: Sharp Kabushiki Kaisha, Osaka-shi, Osaka 545-8522 (JP)
(72) Inventor: Ohkoshi, Yasushi, Osaka-shi Osaka 545-8522 (JP)
(74) Representative: Müller - Hoffmann & Partner

(57) **Abstract**

According to an embodiment, flanges of a fixing base (22) of a structure support tool (4) are placed on an upper face of a rafter, wood screws are screwed and fastened via holes of the flanges into the rafter, and, thus, the fixing base (22) is fixed to the rafter. Furthermore, catches of a washer portion (24) are inserted into a slide hole of the fixing base (22), a movable portion (23) is set to be held between the catches, the washer portion (24) is moved together with the movable portion (23), and the movable portion (23) is positioned. A male screw portion at the lower end of a coupling shaft (21) is passed through a hole at the peak portion of the roof tile (5), and the male screw portion at the lower end is screwed and fastened via a hole of the washer portion (24) and the slide hole 22f of the fixing base (22) into a screw hole of the movable portion (23).

## Description

### BACKGROUND OF THE INVENTION

This application claims priority on Patent Application No. 2009-240238 filed in Japan on October 19, 2009, the entire contents of which are herein incorporated by reference.

The present invention relates to a structure support tool preferably used to support a structure such as a solar cell module on a roof rafter, a structure installing method using the structure support tool, and a solar cell module system using the structure support tool.

Conventionally, a solar cell module is often attached via a support apparatus to a roof. For example, Japanese Utility Model Registration No. 3084621 describes a support apparatus for attaching a solar cell module to a roof.

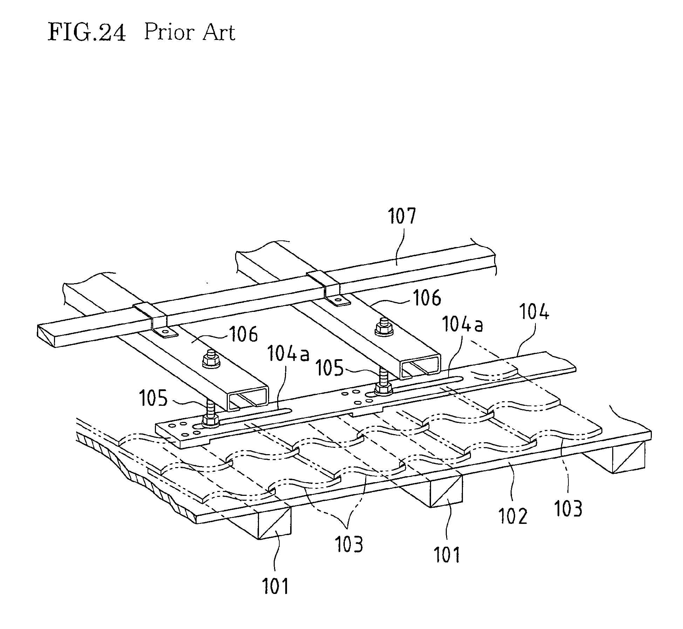

As shown in FIG. 24, this support apparatus is formed so as to be disposed on a roof including rafters 101, a roof board 102, and roof tiles 103. A long base board 104 is disposed on the roof board 102 so as to be orthogonal to the rafters 101, and fixed to the rafters 101 with a plurality of nails at positions corresponding to the rafters 101. The base board 104 is provided with slide holes 104a extending in a direction orthogonal to the rafters 101 such that each slide hole 104a is disposed between the rafters 101. The slide hole 104a is provided with a bolt 105. The bolt 105 can freely move in the slide hole 104a. Accordingly, the bolt 105 can be fixed at any position along the slide hole 104a. A plurality of bolts 105 are arranged on the roof, several vertical crossbars 106 are fixed to the upper ends of the respective bolts 105, several horizontal crossbars 107 are fixed to each vertical crossbar 106, and solar cell modules are fixed to and supported by the horizontal crossbars 107.

Here, in the support apparatus of Japanese Utility Model Registration No. 3084621, the base board 104 is disposed over the plurality of rafters 101, and the length of the base board 104 is long. When installing a solar cell module on an existing roof, it is necessary to once detach a plurality of roof tiles 103 along the base board 104, expose part of the roof board 102 under these roof tiles 103, and attach the base board 104 to the exposed portion. Thus, this configuration is problematic in that effort to detach a large number of roof tiles 103 corresponding to the length of the base board 104 and to attach these roof tiles 103 again to the roof board 102 is required, and the installing procedure is complicated.

Furthermore, the length of the base board 104 has to be long enough to span at least two rafters 101 because the base board 104 is fixed and supported at the rafters 101 on both sides of the slide hole 104a of the base board 104. Accordingly, there is a limitation in reducing the length of the base board 104, and this configuration is still problematic in that a large number of roof tiles 103 have to be detached and attached again.

Here, Japanese Utility Model Registration No. 3084621 discloses a roof in which the roof board 102 is placed on and fixed to the plurality of rafters 101, and the plurality of roof tiles 103 are placed on the roof board 102, but the structure of a roof varies from area to area. For example, there is a roof in which a plurality of tile crossbars orthogonal to a plurality of rafters are fixed to the rafters, and a plurality of roof tiles are placed on these tile crossbars. The support apparatus of Japanese Utility Model Registration No. 3084621 can also be applied to this sort of roof, but the problem as described above occurs in a similar manner.

### SUMMARY OF THE INVENTION

The present invention was made in order to solve the above-described conventional problem, and it is an object thereof to provide a structure support tool having excellent strength and realizing a simple installing procedure in the case where a roof rafter is used as a base for supporting a structure on a roof, a structure installing method using the structure support tool, and a solar cell module system using the structure support tool.

In order to solve the above-described problem, the present invention is directed to a structure support tool for supporting a structure on a roof rafter, including: a fixing base having a main plate through which a slide hole is formed, side plates respectively bent in similar orientations at two sides of the main plate, and a flange bent outward at one side of each of the side plates; a movable portion held so as to be capable of freely moving along the slide hole of the main plate and so as to engage with inner faces of the respective side plates of the fixing base, between the side plates; and a structure coupling portion connected via the slide hole of the main plate of fixing base to the movable portion.

The structure support tool further includes a washer portion overlapped on the main plate of the fixing base in a freely movable manner, wherein the washer portion has a hole for guiding the structure coupling portion to the slide hole of the main plate of the fixing base, and a pair of catches inserted to the slide hole of the main plate of the fixing base to hold the movable portion.

The washer portion has holding plates for respectively holding outer faces of the side plates of the fixing base.

At least part of an inner shape of the side plates of the fixing base and at least part of an outer shape of the movable portion engage with each other, and, thus, the movable portion is held so as not to be detached from space between the side plates.

The side plates of the fixing base are bent at the two sides of the main plate of the fixing base such that a distance between the side plates is shorter near the flange of the fixing base, and the movable portion is in contact and engaged with the inner faces of the side plates of the fixing base.

The movable portion has a main plate and side plates respectively bent in similar orientations at two sides of the main plate, and, in a state where the movable portion is disposed between the side plates of the fixing base, the main plate of the movable portion overlaps the main plate of the fixing base, and the side plates of the movable portion are in orthogonal contact and engaged with the side plates of the fixing base.

A plurality of holes are formed only in a half region obtained by equally dividing each flange of the fixing base into two along a segment orthogonal to the slide hole of the main plate of the fixing base.

The structure coupling portion is a coupling shaft, and a male screw is formed at one end portion of the coupling shaft, and the male screw at the one end portion of the coupling shaft is screwed via the slide hole of the main plate of the fixing base into a screw hole of the movable portion, and, thus, the coupling shaft is connected to the movable portion, and the movable portion is fixed to the fixing base.

The structure coupling portion has a male screw shaft and a pipe through which the male screw shaft is passed, the male screw shaft is passed through the pipe, one end portion of the male screw shaft is screwed via the slide hole of the main plate of the fixing base into a screw hole of the movable portion, and, thus, the male screw shaft is connected to the movable portion, and the movable portion is fixed to the fixing base.

The structure coupling portion has a coupling portion main unit and a bolt connecting the coupling portion main unit to the movable portion, the bolt is screwed via a hole of the coupling portion main unit and the slide hole of the main plate of the fixing base into a screw hole of the movable portion, and, thus, the bolt and the coupling portion main unit are connected to the movable portion, and the movable portion is fixed to the fixing base.

The coupling portion main unit has a portion shaped so as to be bent along the main plate and the side plate of the fixing base and in contact with the flange of the fixing base when connected to the movable portion with the bolt. Furthermore, the structure may be a solar cell module or a support member of a solar cell module.

In the structure support tool of the present invention, the load of the structure supported by the structure support tool acts on a position above the rafter or near the rafter, and is more stably supported by the rafter. If the load acts on a position away from the rafter, the rotational moment of the structure support tool about the rafter increases, and the load cannot be stably supported by the rafter.

Furthermore, movement space of the movable portion is secured between the inner portion of the side plates of the fixing base and the rafter, and, thus, the movable portion can be moved to any position along the slide hole. Moreover, the movable portion is engaged with and held by the inner faces of the respective side plates, and, thus, the movable portion is not detached from the inner faces of the side plates.

Furthermore, the structure coupling portion is connected via the slide hole of the main plate of the fixing base to the movable portion, and, thus, the structure coupling portion can be connected to the movable portion moved to any position. Moreover, the above-described shape of the fixing base increases the strength of the fixing base.

In order to attach such a structure support tool, one roof tile is detached so that one rafter is exposed, and the fixing base is fixed to this rafter. Then, a hole is formed through the peak portion of the wave-shaped roof tile, the movable portion is moved to the peak portion of the wave-shaped roof tile, and, then, the roof tile is placed, and the structure coupling portion is connected via the hole of the roof tile and the slide hole of the main plate of the fixing base to the movable portion. Accordingly, the structure coupling portion is fixed to the roof, and the structure can be connected and fixed to the structure coupling portion. Furthermore, rainwater flowing along the valley portion of the wave-shaped roof tile does not enter the hole at the peak portion of the roof tile. Moreover, the installing procedure is simple because only detachment and attachment of one roof tile are necessary to attach one structure support tool.

Furthermore, when the positions of a plurality of structure support tools are optimized such that the structure support tools are dispersed so as to be capable of supporting the structure in a balanced manner, while the number of support positions of the structure is reduced to the extent possible, the structure can be firmly supported by the structure support tools.

Furthermore, a structure installing method using the structure support is also included in the technical scope of the present invention. This installing method is a structure installing method for supporting a structure on a roof using the structure support tool according to any one of the above-described aspects, including the steps of placing and fixing each flange of the fixing base of the structure support tool on a roof rafter; moving the movable portion between the side plates of the fixing base along the slide hole of the fixing base, thereby positioning the movable portion; forming a hole through a roof tile, and placing the roof tile on the rafter such that the hole of the roof tile overlaps the movable portion; and connecting and fixing the structure coupling portion of the structure support tool via the hole of the roof tile and the slide hole of the fixing base to the movable portion. Furthermore, the hole of the roof tile is preferably formed through a peak portion of a wave-shaped roof tile.

Accordingly, since the structure coupling portion is connected via the hole of the roof tile and the slide hole of the main plate of the fixing base to the movable portion after the roof tile is placed on the rafter such that the hole of the roof tile overlaps the movable portion, the roof tile can be easily disposed again, and the operation efficiency is good.

Furthermore, a solar cell module system using the structure support tool is also included in the technical scope of the present invention. The solar cell module system of the present invention is provided with the structure support tool of the present invention, and, thus, achieves the same working effects as those described above, and can support a solar cell module as the structure on the rafter.

### BRIEF DESCRIPTION OF THE DRAWINGS

FIG. 1 is a perspective view showing a solar cell module system to which structure support tools according to a first embodiment have been applied.
FIG. 2A is a plan view showing the solar cell module system of FIG. 1, and FIG. 2B is a side view thereof.
FIG. 3 is a cross-sectional view schematically showing the structure of a roof to which the solar cell module system of FIG. 1 is to be attached.
FIG. 4 is a perspective view showing an enlarged structure of the roof of FIG. 3.
FIG. 5 is a perspective view showing the structure support tool according to the first embodiment.
FIG. 6 is a plan view showing the structure support tool of FIG. 5.
FIG. 7 is a front view showing the structure support tool of FIG. 5.
FIG. 8 is a side view showing the structure support tool of FIG. 5.
FIG. 9 is a perspective view showing a movable portion in the structure support tool of FIG. 5.
FIG. 10 is a perspective view showing a washer portion in the structure support tool of FIG. 5.
FIG. 11A is a side view showing a state in which the structure support tool is attached to a rafter, and FIG. 11B is a front view thereof.
FIG. 12 is a perspective view showing a vertical crossbar in the structure support tool.
FIG. 13 is a perspective view showing a tap fitting that is to be attached to the vertical crossbar.
FIG. 14A is a perspective view showing the tap fitting and the vertical crossbar viewed from the front, and FIG. 14B a perspective view thereof viewed from the back.
FIG. 15 is an enlarged cross-sectional view showing a structure in which the vertical crossbar is supported by the structure support tool.
FIG. 16 is an exploded perspective view showing a structure in which the horizontal crossbar is attached to the vertical crossbar.
FIG. 17 is a perspective view showing a state in which the fixing fitting is attached to the horizontal crossbar.
FIGS. 18A to 18D are views showing the installing procedure for fitting and fixing a solar cell module between a pair of horizontal crossbars.
FIG. 19 is a perspective view showing a modified example of the structure support tool.
FIG. 20 is a perspective view showing a structure support tool according to a second embodiment.
FIG. 21 is a perspective view showing a state in which a vertical crossbar is supported by the structure support tool of FIG. 20.
FIG. 22 is a side view showing a structure in which a vertical crossbar is supported by the structure support tool of FIG. 20.
FIGS. 23A to 23D are cross-sectional views schematically showing modified examples of the fixing base and the movable portion of the structure support tool.
FIG. 24 is a perspective view showing a conventional solar cell module system.

### DESCRIPTION OF THE PREFERRED EMBODIMENTS

Hereinafter, embodiments of the present invention will be described with reference to the drawings.

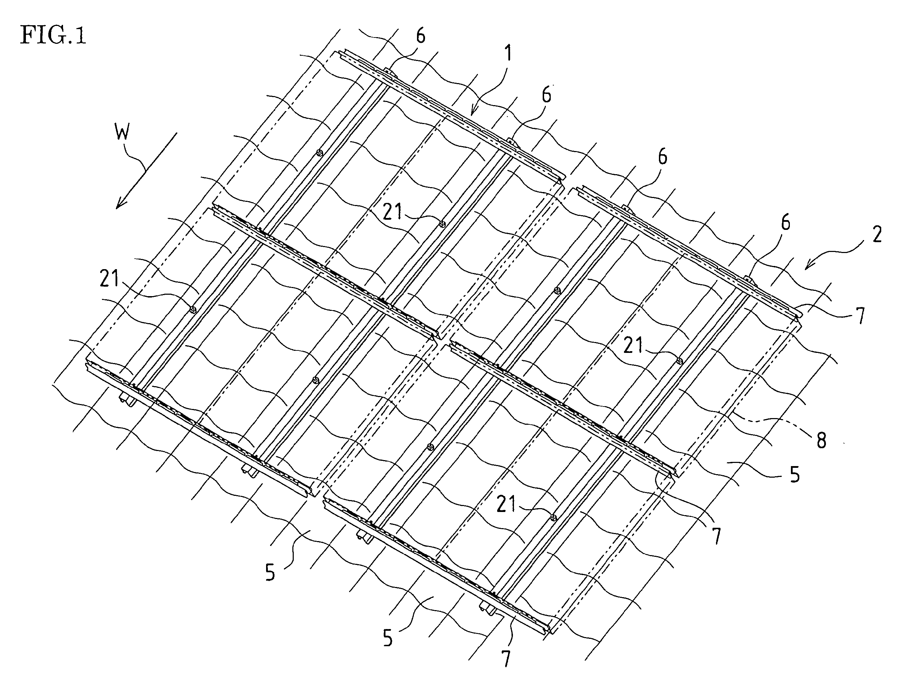

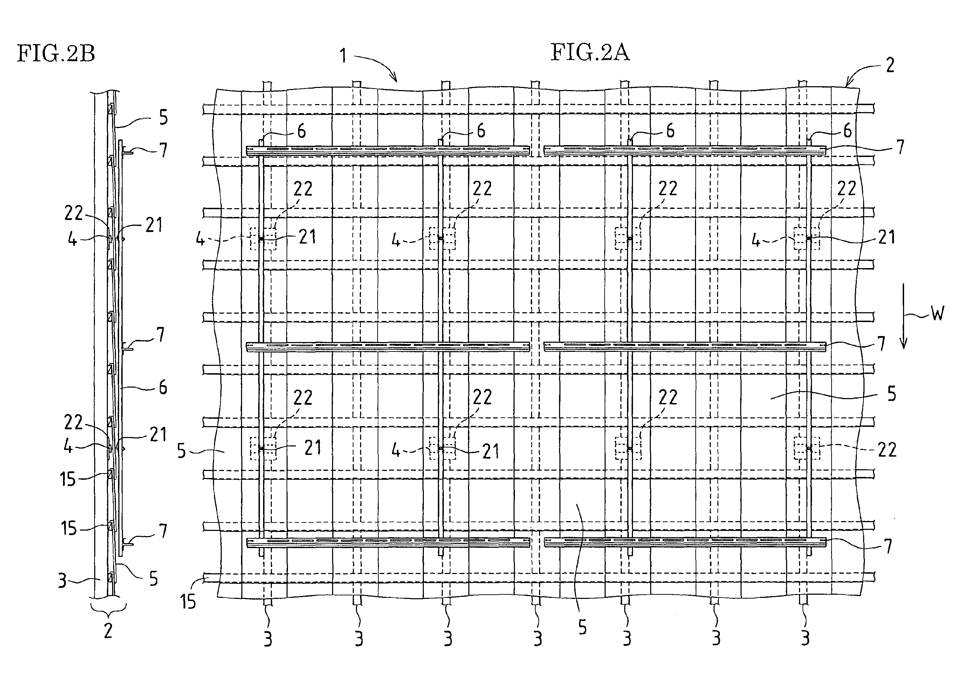

FIG. 1 is a perspective view showing a solar cell module system to which structure support tools according to a first embodiment of the present invention have been applied. FIGS. 2A and 2B are a plan view and a side view showing the solar cell module system of FIG. 1.

A solar cell module system 1 of this embodiment is supported in the following manner: two structure support tools 4 are fixed to each of four rafters 3 of a roof 2, coupling shafts 21 of the respective structure support tools 4 are projected via holes of respective roof tiles 5, a vertical crossbar 6 is supported by the coupling shafts 21 of two structure support tools 4 of each rafter 3, four vertical crossbars 6 are spaced away from each other and fixed in parallel to each other, three rows of horizontal crossbars 7 are fixed in parallel to each other at constant intervals to each vertical crossbar 6, and eight solar cell modules 8 are fitted and fixed between the three rows of horizontal crossbars 7.

The longitudinal direction of each vertical crossbar 6 corresponds to a water flow direction W of the roof 2, and the longitudinal direction of each horizontal crossbar 7 corresponds to a direction orthogonal to the water flow direction W. Furthermore, three rows of horizontal crossbars 7 (six horizontal crossbars in total) are fixed to four vertical crossbars 6, and, in each row, two horizontal crossbars 7 are linearly arranged. The first row, the second row, and then the third row of horizontal crossbars 7 are arranged from the downstream side to the upstream side of the water flow direction W, four solar cell modules 8 are fitted and fixed between the first and the second rows of horizontal crossbars 7, and four solar cell modules 8 are fitted and fixed between the second and the third rows of horizontal crossbars 7.

The solar cell module 8 is configured from a solar cell panel and frame members defining and holding the solar cell panel.

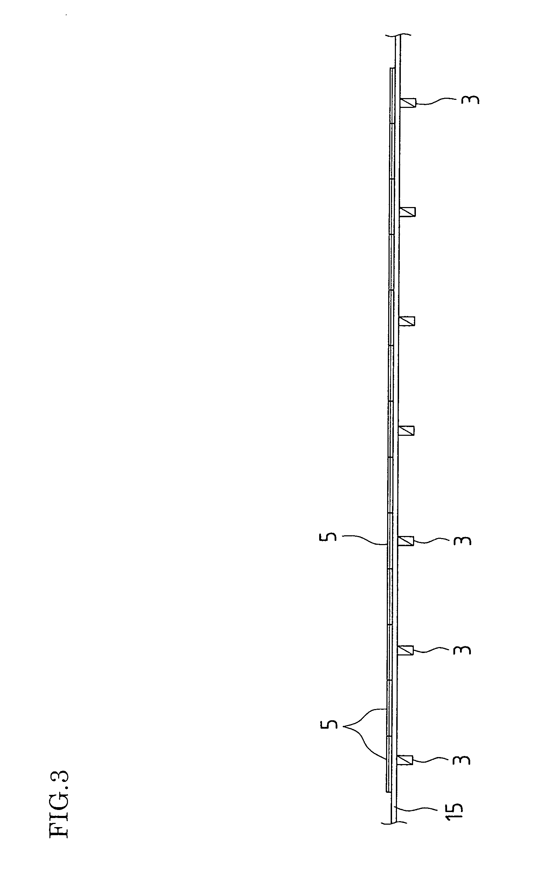

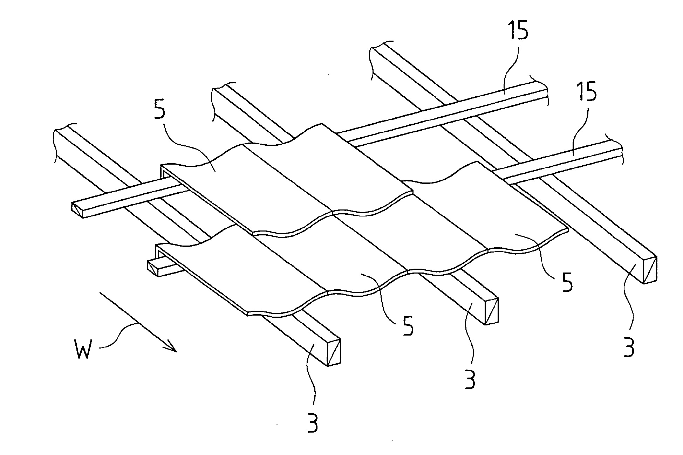

FIG. 3 is a cross-sectional view schematically showing the structure of a roof to which the solar cell module system 1 is to be attached. FIG. 4 is a perspective view showing an enlarged structure of the roof. In the roof 2, a plurality of rafters 3 are arranged in parallel to each other in the water flow direction W, a plurality of tile crossbars 15 are arranged on each rafter 3 in parallel to each other orthogonally to the water flow direction W, and a plurality of roof tiles 5 are placed between the tile crossbars 15. The roof tiles 5 partially overlap each other on the tile crossbars 15.

In the solar cell module system 1 of this embodiment, the structure support tools 4 are used to fix the vertical crossbars 6 on the rafters 3. As clearly seen from FIGS. 1, 2A, and 2B, two structure support tools 4 are attached to each rafter 3, the coupling shafts 21 of the two structure support tools 4 are projected upward via holes of the respective roof tiles 5, and one vertical crossbar 6 is connected and fixed to the upper ends of the two coupling shafts 21.

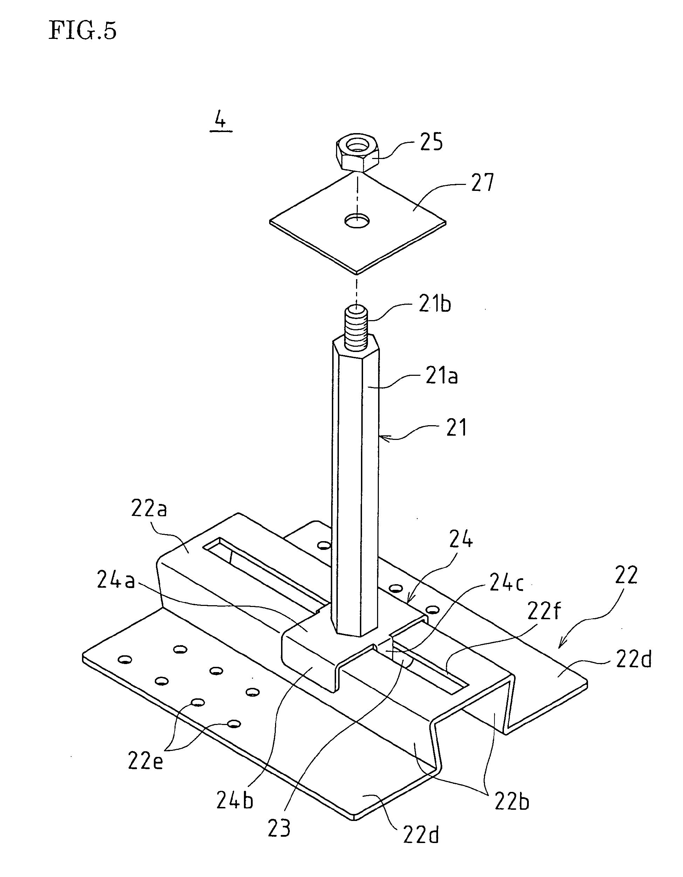

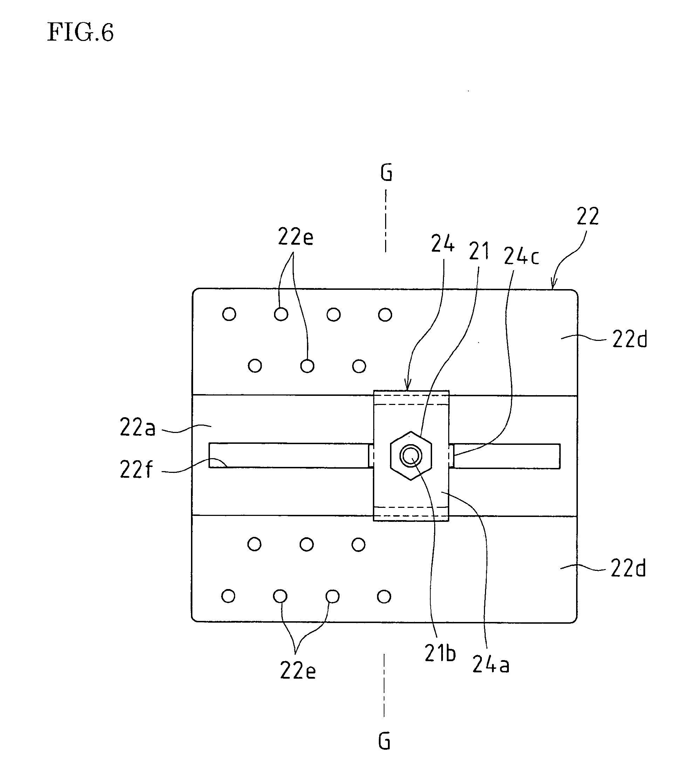

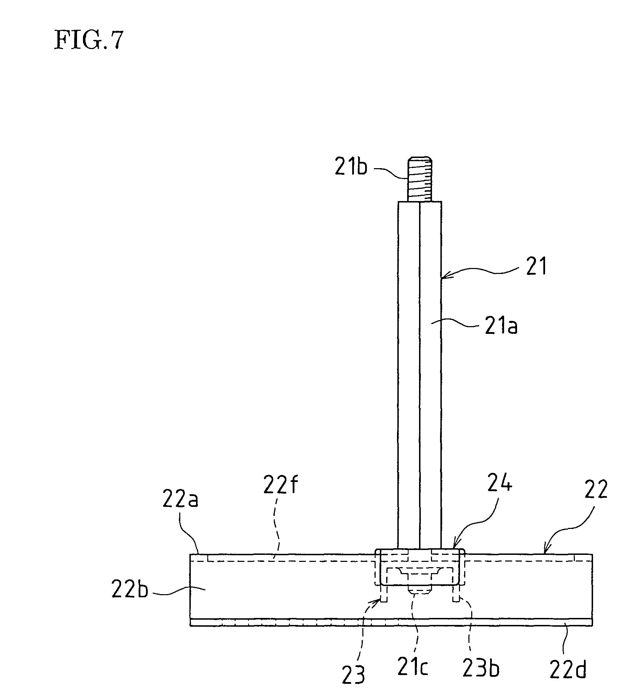

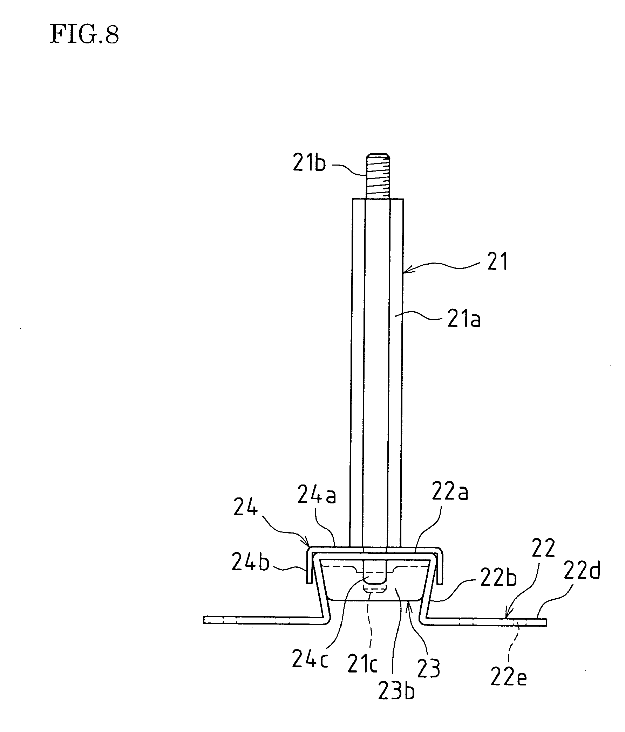

FIG. 5 is a perspective view showing the structure support tool 4. FIGS. 6, 7, and 8 respectively are a plan view, a front view, and a side view showing the structure support tool 4.

As clearly seen from FIGS. 5 to 8, the structure support tool 4 is provided with a fixing base 22, a movable portion 23 disposed inside the fixing base 22, a washer portion 24 disposed on the fixing base 22, and the coupling shaft 21 projected from the fixing base 22.

The fixing base 22 is obtained by cutting, bending, and plating a metal plate. The fixing base 22 has a rectangular main plate 22a, side plates 22b respectively bent in similar orientations at two sides of the main plate 22a, and a flange 22d bent outward at one side of each of the side plates 22b.

A slide hole 22f extending in the longitudinal direction of the fixing base 22 is formed through the main plate 22a. A plurality of holes 22e are formed through each flange 22d. The holes 22e are formed only in a half region obtained by equally dividing each flange 22d into two along a virtual segment G (shown in FIG. 6) orthogonal to the slide hole 22f of the main plate 22a.

The main plate 22a, the side plates 22b, and the flanges 22d have a hat-shaped cross-section. The hat-shaped cross-section is advantageous in that the strength of that shape is high and the strength of the entire fixing base 22 is increased.

The bending angle (less than 90°) between the main plate 22a and each side plate 22b is set such that the distance between the side plates 22b is longer near the main plate 22a and shorter near the flanges 22d, and the inner shape defined by the main plate 22a and the side plates 22b is a trapezoid.

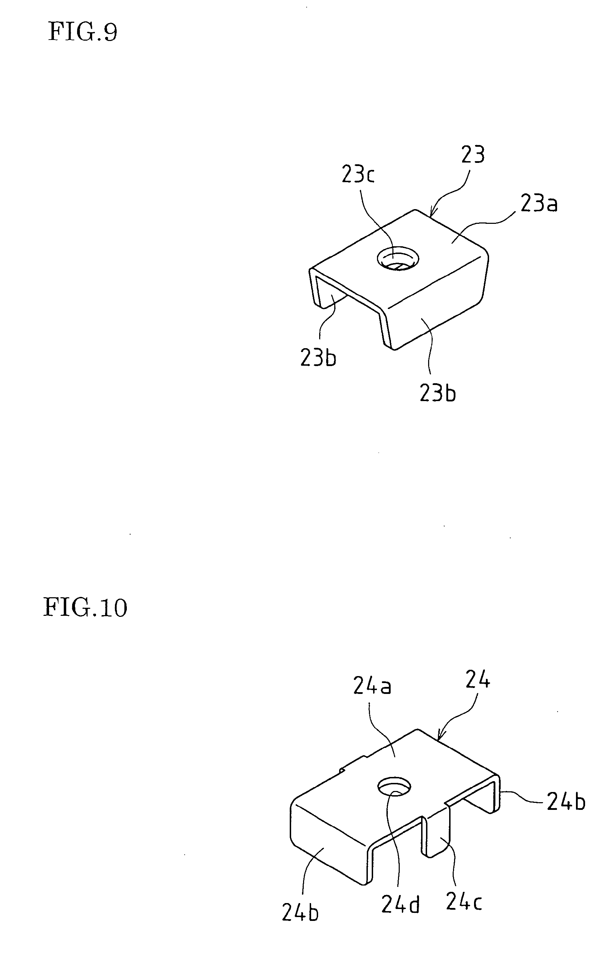

The movable portion 23 is obtained by bending and plating a metal plate. As shown in FIG. 9, the movable portion 23 has a rectangular main plate 23a and side plates 23b respectively bent at two sides of the main plate 23a. A screw hole 23c is formed through the main plate 23a. The outer shape of each of the side plates 23b is a slightly small trapezoid similar to the trapezoidal inner shape of the main plate 22a and the side plates 22b of the fixing base 22.

In a state where the side plates 23b of the movable portion 23 are orthogonal to the side plates 22b of the fixing base 22, the movable portion 23 is inserted to space between the side plates 22b of the fixing base 22 from open ends of the side plates 22b. At that time, the main plate 23a of the movable portion 23 overlaps the main plate 22a of the fixing base 22, the screw hole 23c of the main plate 23a of the movable portion 23 overlaps the slide hole 22f of the fixing base 22, and the side plates 23b of the movable portion 23 are in orthogonal contact with the side plates 22b of the fixing base 22. Then, the trapezoid outside of each of the side plates 23b of the movable portion 23 engages with the trapezoid inside of the main plate 22a and the side plates 22b of the fixing base 22, and, thus, the movable portion 23 is held so as not to be detached from the side plates 22b of the fixing base 22.

Furthermore, the trapezoid outside of each of the side plates 23b of the movable portion 23 is smaller than the trapezoid inside of the main plate 22a and the side plates 22b of the fixing base 22, and, thus, the movable portion 23 is held in a freely movable manner along the slide hole 22f of the fixing base 22.

The washer portion 24 is obtained by bending and plating a metal plate. As shown in FIG. 10, the washer portion 24 has a rectangular main plate 24a, holding plates 24b respectively bent at two sides of the main plate 24a, and catches 24c respectively bent at front and back portions of the main plate 24a. A hole 24d is formed through the main plate 24a.

The washer portion 24 is placed on the main plate 22a of the fixing base 22 such that the side plates 22b of the fixing base 22 are held between the holding plates 24b of the washer portion 24. At that time, the main plate 24a of the washer portion 24 overlaps the slide hole 22f of the fixing base 22. Furthermore, the catches 24c of the washer portion 24 are inserted into the slide hole 22f of the fixing base 22, and the movable portion 23 is held between the catches 24c.

There is a slight gap between the holding plates 24b of the washer portion 24 and the side plates 22b of the fixing base 22, the width of each catch 24c of the washer portion 24 is slightly narrower than the width of the slide hole 22f of the fixing base 22, and the washer portion 24 can freely move on the main plate 22a of the fixing base 22. Furthermore, the holding plates 24b guide the washer portion 24 along the side plates 22b of the fixing base 22, and the catches 24c guide the washer portion 24 along the slide hole 22f of the fixing base 22. Accordingly, the washer portion 24 can move on the main plate 22a of the fixing base 22 along the slide hole 22f.

Furthermore, the catches 24c of the washer portion 24 hold the movable portion 23 via the slide hole 22f of the fixing base 22, and, thus, when the washer portion 24 moves along the slide hole 22f, the movable portion 23 between the catches 24c of the washer portion 24 also moves along the slide hole 22f. Accordingly, it is possible to move the movable portion 23 by operating the washer portion 24, without direct contact with the movable portion 23.

Moreover, in a state where the movable portion 23 is held between the catches 24c of the washer portion 24, the hole 24d of the main plate 24a of the washer portion 24 overlaps the screw hole 23c of the main plate 23a of the movable portion 23 via the slide hole 22f of the fixing base 22.

The coupling shaft 21 has a hexagonal cylinder 21a and male screw portions 21b and 21c at the upper and lower ends of the hexagonal cylinder 21a. The male screw portion 21c at the lower end of the coupling shaft 21 is screwed via the hole 24d of the washer portion 24 and the slide hole 22f of the fixing base 22 into the screw hole 23c of the movable portion 23. The coupling shaft 21 can be screwed using an ordinary wrench that can rotate the hexagonal cylinder 21a of the coupling shaft 21.

Here, in a state where the coupling shaft 21 is detached, there is a gap between the main plate 24a of the washer portion 24, the main plate 22a of the fixing base 22, and the main plate 23a of the movable portion 23, and, thus, the washer portion 24 and the movable portion 23 can be moved along the slide hole 22f of the fixing base 22, and the position of the movable portion 23 can be adjusted. Then, after the position of the movable portion 23 is adjusted, when the male screw portion 21c at the lower end of the coupling shaft 21 is screwed and fastened via the hole 24d of the washer portion 24 and the slide hole 22f of the fixing base 22 into the screw hole 23c of the movable portion 23, the main plate 24a of the washer portion 24, the main plate 22a of the fixing base 22, and the main plate 23a of the movable portion 23 press against each other, the washer portion 24 and the movable portion 23 are positioned and fixed with respect to the main plate 22a of the fixing base 22, the coupling shaft 21 is projected from the main plate 24a of the washer portion 24, and the coupling shaft 21 is also positioned and fixed.

In a state where the washer portion 24 and the movable portion 23 are fixed to the main plate 22a of the fixing base 22, the fixing base 22 is held by the holding plates 24b of the washer portion 24, the main plate 24a of the washer portion 24 blocks the slide hole 22f of the fixing base 22, and the strength of the fixing base 22 is increased. Furthermore, the side plates 23b of the movable portion 23 are brought into orthogonal contact with the side plates 22b of the fixing base 22, the side plates of the movable portion 23 block the internal space between the side plates 22b of the fixing base 22, and, thus, the strength of the fixing base 22 is increased, and the load capacity is improved.

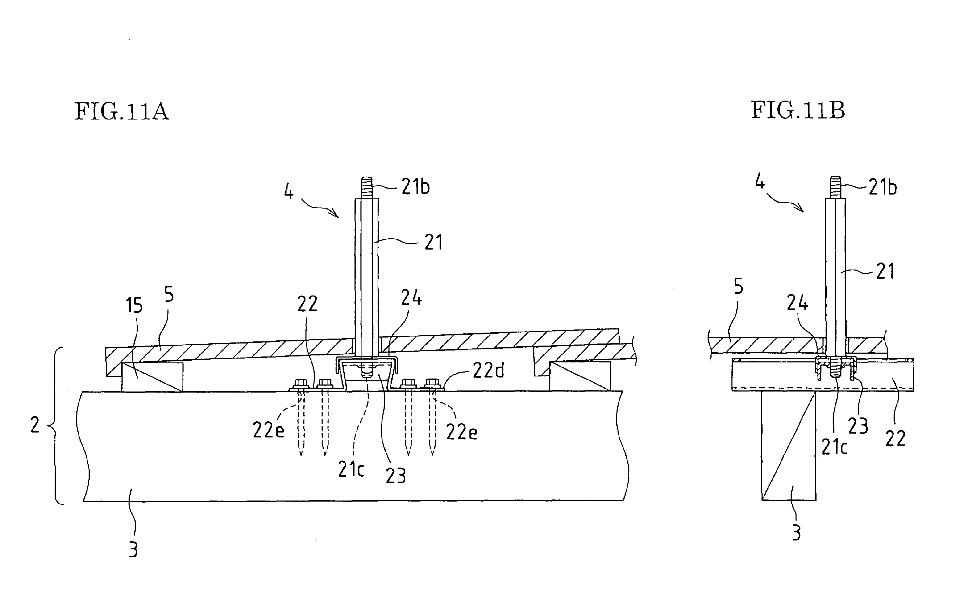

FIG. 11A is a side view showing a state in which the structure support tool 4 is attached to the rafter, and FIG. 11B is a front view thereof. Here, after one roof tile 5 is detached, as shown in FIGS. 11A and 11B, the flanges 22d of the fixing base 22 are placed on the upper face of the rafter 3 so as to be orthogonal to the rafter 3, a plurality (two to four) of wood screws are screwed and fastened via the holes 22e of the flanges 22d into the rafter 3, and, thus, the fixing base 22 is fixed to the rafter 3.

In a state where the coupling shaft 21 is detached, the washer portion 24 and the movable portion 23 can be moved along the slide hole 22f of the fixing base 22, and the position of the movable portion 23 can be adjusted. After the position of the movable portion 23 is adjusted, and the screw hole 23c of the movable portion 23 is positioned, the detached roof tile 5 is returned to the original position, the male screw portion 21c at the lower end of the coupling shaft 21 is screwed and fastened via the hole of the roof tile 5, the hole 24d of the washer portion 24, and the slide hole 22f of the fixing base 22 into the screw hole 23c of the movable portion 23, and, thus, the washer portion 24 and the movable portion 23 are positioned and fixed, and the coupling shaft 21 is also positioned and fixed.

The vertical crossbars 6 are fixed to the male screw portions 21b at the upper ends of the thus positioned and fixed coupling shafts 21, and the horizontal crossbars 7 and the solar cell modules 8 are mounted on the vertical crossbars 6. Accordingly, a large load of the solar cell modules 8 and the like is applied to the coupling shafts 21, and this load is applied also to the fixing bases 22 and the rafters 3.

Here, as clearly seen from FIGS. 11A and 11B, when the fixing base 22 of the structure support tool 4 is mounted on the rafter 3, the slide hole 22f of the fixing base 22 is positioned on the rafter 3, the range in which the coupling shaft 21 can slide is set to the vicinity of the rafter 3, and the coupling shaft 21 is fixed at any position above the rafter 3 or near the rafter 3. Thus, while the position of the coupling shaft 21 can be adjusted, the load acts on a position above the rafter 3 or near the rafter 3, and is more stably supported by the rafter 3.

If the load acts on a position away from the rafter 3, the rotational moment of the structure support tool 4 about the rafter 3 increases, and the load cannot be stably supported by the rafter 3.

Next, the installing procedure for attaching the solar cell modules 8 to the roof 2 using the structure support tools 4 will be described.

First, the positions of the rafters 3 on the roof as shown in FIGS. 2A and 2B are checked, the arrangement positions of four solar cell modules 8 are determined such that the rafters 3 respectively overlap the vicinities of the centers of the four solar cell modules 8 aligned in a direction orthogonal to the water flow direction W, and four rafters 3 in total are selected. Then, the arrangement positions of eight solar cell modules 8 in total are determined assuming that two solar cell modules 8 are aligned in the water flow direction W for each of the selected rafters 3. Furthermore, the attachment positions of two structure support tools 4 are determined for each rafter 3, the roof tiles 5 at these attachment positions are detached, and the rafter 3 under the roof tiles 5 is exposed. At that time, the attachment positions of two structure support tools 4 are determined according to the coupling positions with the vertical crossbar 6, but are determined so as to be capable of supporting the vertical crossbar 6 in a balanced manner.

Next, as shown in FIGS. 11A and 11B, the flanges 22d of the fixing base 22 are placed on the upper face of the rafter 3, the fixing base 22 is positioned, a plurality (two to four) of wood screws are screwed and fastened via the holes 22e of the flanges 22d into the rafter 3, and, thus, the fixing base 22 is fixed to the rafter 3. At that time, the fixing base 22 is fixed to the rafter 3 such that, when the roof tile 5 detached in advance is returned to the original position and placed again, the slide hole 22f of the fixing base 22 is positioned under the vicinity of the peak portion of the wave-shaped roof tile 5. Furthermore, since the holes 22e are formed only in a half region of each flange 22d of the fixing base 22, the positioning range of the slide hole 22f of the fixing base 22 can be increased leftward and rightward with an operation that switches the left and the right of the fixing base 22 through 180° rotation and sets the holes 22e of the flanges 22d to overlap the rafter 3.

Here, in the case where a roofing sheet is placed on the rafter 3, the fixing base 22 is screwed via the roofing sheet into the rafter 3. Then, the washer portion 24 is placed on the main plate 22a of the fixing base 22, the catches 24c of the washer portion 24 are inserted into the slide hole 22f of the fixing base 22, the movable portion 23 is set to be held between the catches 24c, the washer portion 24 is moved together with the movable portion 23, and the movable portion 23 is positioned. At that time, the position of the movable portion 23 is adjusted such that, when the roof tile 5 detached in advance is returned to the original position and placed again, the screw hole 23c of the movable portion 23 overlaps the peak portion of the wave-shaped roof tile 5, and such that the screw hole 23c of the movable portion 23 is not too far from the rafter 3.

Next, a hole is formed at the peak portion of the roof tile 5 overlapping the screw hole 23c of the movable portion 23 when the roof tile 5 detached in advance is returned to the original position and placed again. Then, the roof tile 5 is returned to the original position and placed again.

For each of a plurality of roof tiles 5 detached in advance, the position of the movable portion 23 is adjusted, and a hole is formed at the peak portion of the roof tile 5 overlapping the screw hole 23c of the movable portion 23 with a similar procedure. Then, for each of these roof tiles 5, the male screw portion 21c at the lower end of the coupling shaft 21 is passed through the hole at the peak portion of the roof tile 5, the male screw portion 21c at the lower end is screwed and fastened via the hole 24d of the washer portion 24 and the slide hole 22f of the fixing base 22 into the screw hole 23c of the movable portion 23, and, thus, the movable portion 23 is fixed, and the coupling shaft 21 is also fixed so as to be projected from the main plate 24a of the washer portion 24.

Subsequently, a gap between the hole at the peak portion of the roof tile 5 and the coupling shaft 21 is blocked with a silicon resin or the like. Rainwater tends to flow along the valley portion of the wave-shaped roof tile 5, and, thus, when holes are respectively formed at the peak portions of the wave-shaped roof tiles 5, the possibility that these holes cause leaking of rain can be significantly reduced.

After two structure support tools 4 are fixed to each of four rafters 3 in this manner, four vertical crossbars 6 are arranged in parallel to each other at constant intervals such that each vertical crossbar 6 is supported by two structure support tools 4 on each rafter 3. The heights of the coupling shafts 21 of the respective structure support tools 4 are the same, and, thus, when the vertical crossbar 6 is supported by two structure support tools 4 on the rafter 3, the vertical crossbar 6 is parallel to the rafter 3. Furthermore, the rafters 3 are parallel to each other, and, thus, the four vertical crossbars 6 are also parallel to each other. Thus, three rows of horizontal crossbars 7 can be easily supported on these vertical crossbars 6 in parallel to each other, and plate-shaped solar cell modules 8 can be easily supported between these horizontal crossbars 7.

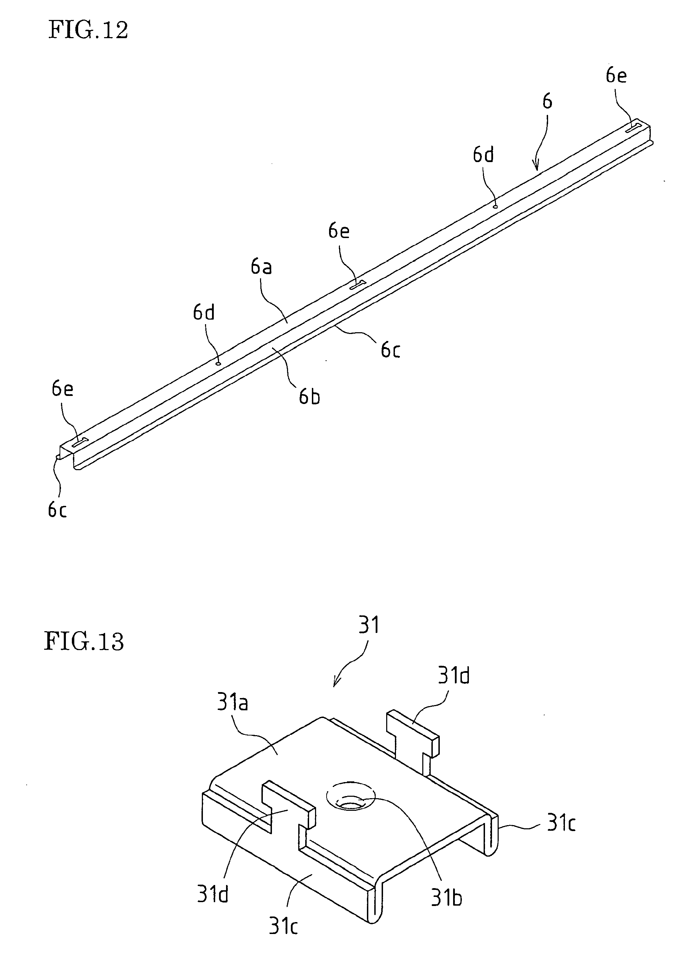

As shown in FIG. 12, the vertical crossbar 6 has a hat-shaped cross-section defined by a long main plate 6a, side plates 6b respectively bent at two sides of the main plate 6a, and a flange 6c bent at one side of each of the side plates 6b. Attachment holes 6d are formed at two positions on the main plate 6a, and engagement holes 6e are formed at three positions on the main plate 6a.

A tap fitting 31 as shown in FIG. 13 is attached to each of the engagement holes 6e of the main plate 6a of the vertical crossbar 6. The tap fitting 31 is obtained by forming a screw hole 31b through a main plate 31a, arranging double-folded side plates 31c at two sides of the main plate 31a, and arranging T-shaped support pieces 31d projecting from the centers of the respective side plates 31c.

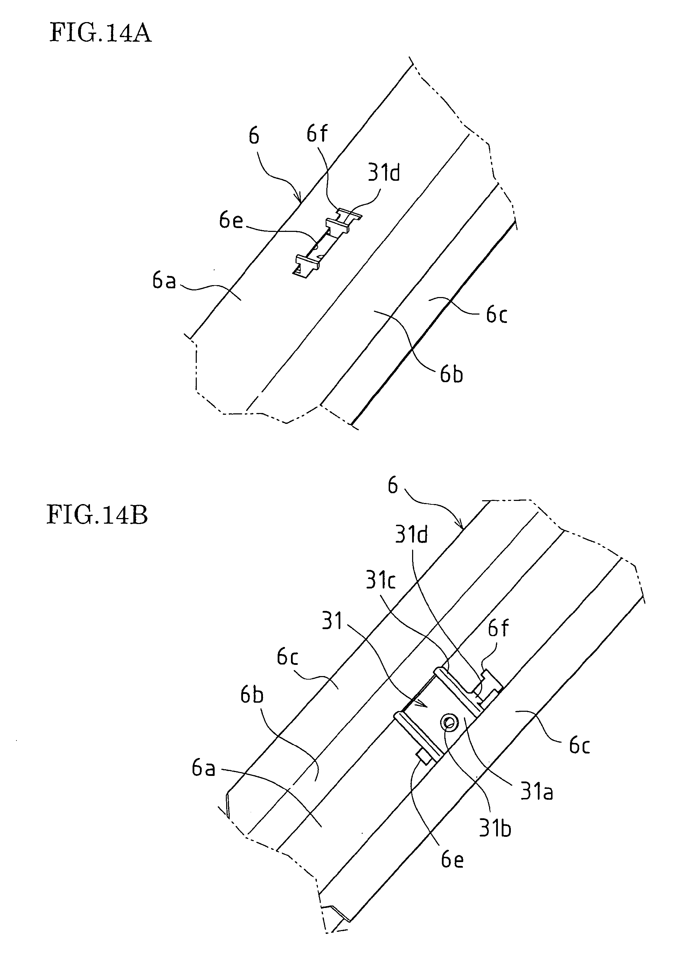

As shown in FIGS. 14A and 14B, one of the support pieces 31d of the tap fitting 31 is inserted into a slit 6f of the vertical crossbar 6, the one support piece 31d is moved from the slit 6f to the engagement hole 6e, the other support piece 31d of the tap fitting 31 is then inserted into the slit 6f, the other support piece 31d is also moved from the slit 6f to the engagement hole 6e, the T-shaped head portions of the respective support pieces 31d are hooked at the engagement hole 6e, and, thus, the tap fitting 31 is attached to the main plate 6a of the vertical crossbar 6. At that time, the side plates 31c of the tap fitting 31 are arranged perpendicular to the side plates 6b of the vertical crossbar 6.

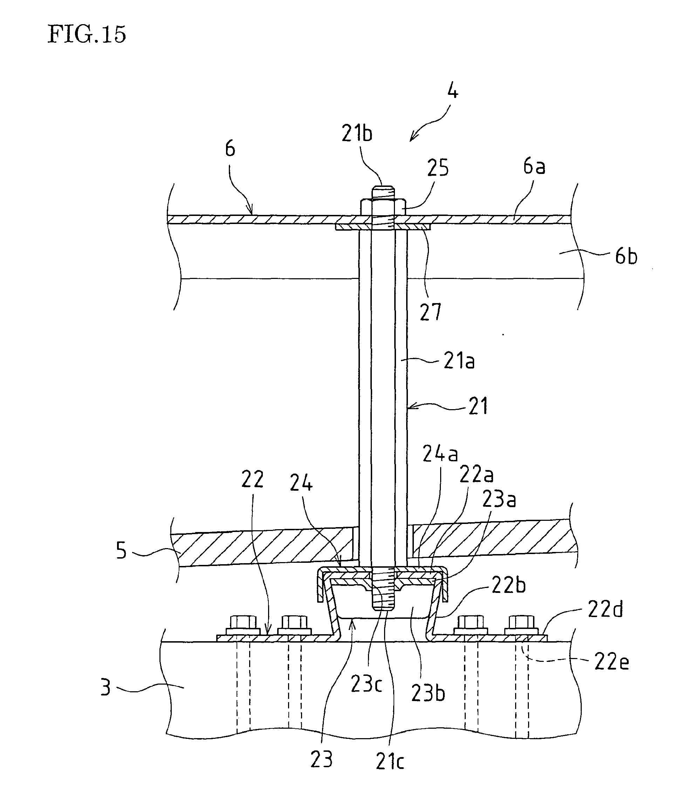

After the tap fittings 31 are respectively attached to three positions on the main plate 6a of the vertical crossbar 6 in this manner, as shown in FIG. 15, a washer 27 is fitted to the male screw portion 21b at the upper end of the coupling shaft 21 of the structure support tool 4, the washer 27 is placed on the hexagonal cylinder 21a of the coupling shaft 21, the male screw portion 21b is inserted into the attachment hole 6d of the main plate 6a of the vertical crossbar 6, the main plate 6a of the vertical crossbar 6 is placed on the washer 27, a nut 25 is screwed and fastened into the male screw portion 21b, and, thus, the main plate 6a of the vertical crossbar 6 is held and fixed between the washer 27 and the nut 25. Accordingly, the vertical crossbar 6 is attached to the upper end of the coupling shaft 21.

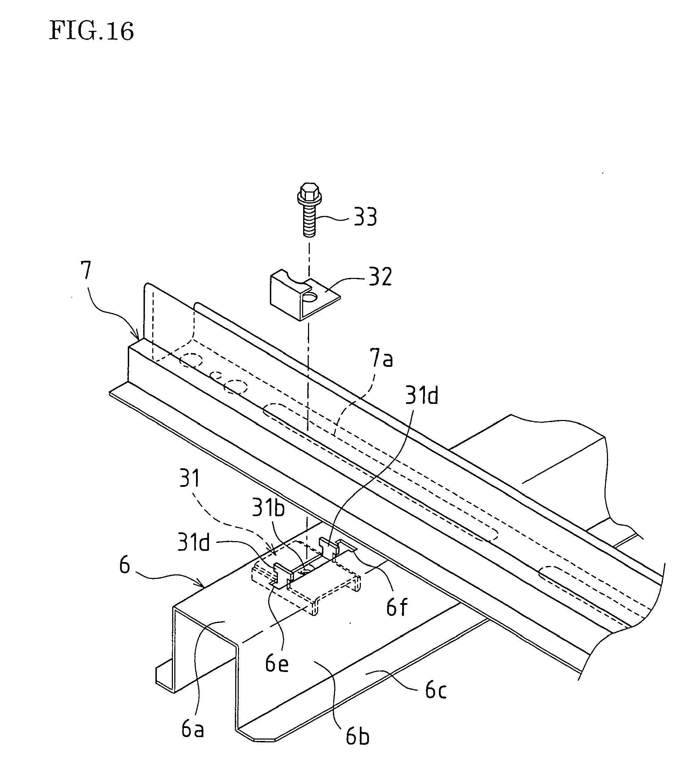

Next, three rows of horizontal crossbars 7 are fixed to four vertical crossbars 6. As shown in FIG. 16, the horizontal crossbar 7 is disposed between a pair of support pieces 31d of the tap fitting 31 attached to the engagement hole 6e of the vertical crossbar 6, a pressing member 32 is overlapped with the horizontal crossbar 7 at the position of the tap fitting 31, a bolt 33 is screwed via a hole of the pressing member 32 and a groove hole 7a of the horizontal crossbar 7 into the screw hole 31b of the tap fitting 31, and, thus, the horizontal crossbar 7 is temporarily fixed to the vertical crossbar 6.

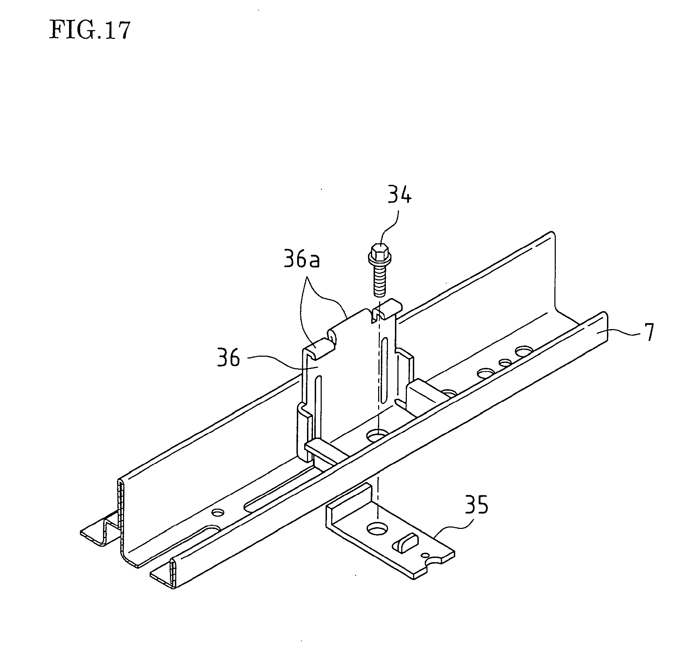

As shown in FIGS. 1, 2A, and 2B, three rows of horizontal crossbars 7 are arranged in parallel to each other at constant intervals on the vertical crossbars 6, and the horizontal crossbars 7 are temporarily fixed. As shown in FIG. 17, in the horizontal crossbar 7, a bolt 34 and a screw-down fitting 35 are used to fix a fixing fitting 36 to the horizontal crossbar 7. The fixing fitting 36 has hook catches 36a at the upper end thereof that are engaged with one side of the solar cell module 8 to fix and support the solar cell module 8, two of the hook catches 36a being used as a set for one side of the solar cell module 8.

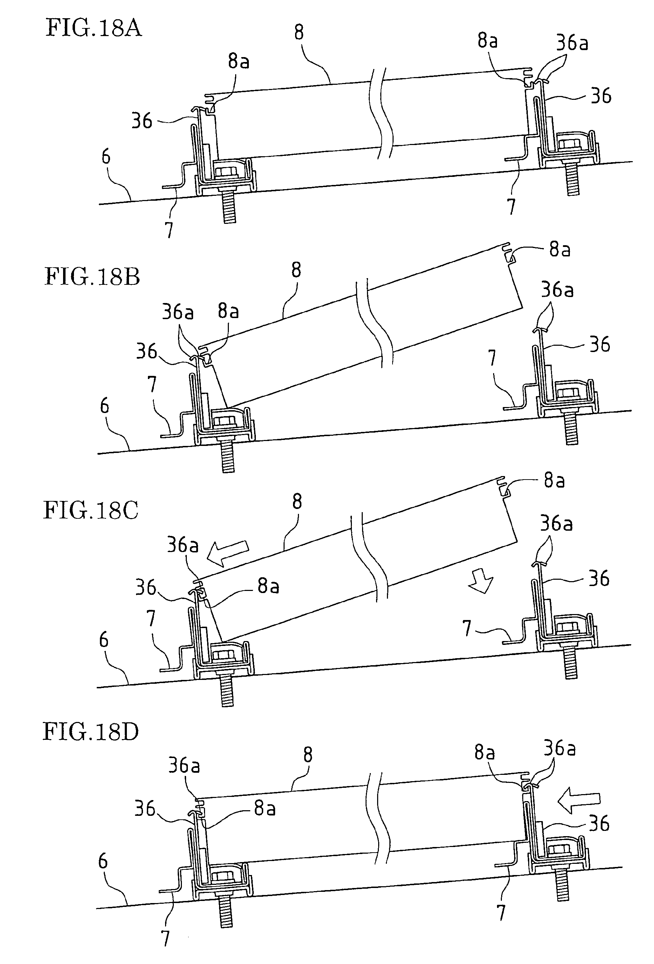

Subsequently, four solar cell modules 8 are horizontally aligned, and inserted so as to be arranged between a first row of horizontal crossbars 7 and a second row of horizontal crossbars 7 as shown in FIG. 18A. Then, for each solar cell module 8, a side upstream in the water flow direction of the solar cell module 8 is lifted as shown in FIG. 18B, and a side downstream in the water flow direction of the solar cell module 8 is pressed against the first row of horizontal crossbar 7 as shown in FIG. 18C. Accordingly, the hook catch 36a of the fixing fitting 36 engages with an engagement groove 8a of the one downstream side of the solar cell module 8. Moreover, as shown in FIG. 18D, the side upstream in the water flow direction of the solar cell module 8 is lowered, and placed on the second row of horizontal crossbar 7.

Subsequently, the second row of horizontal crossbar 7 is pressed against the side upstream in the water flow direction of the solar cell module 8, and, thus, the solar cell module 8 is held and supported between the first row of horizontal crossbar 7 and the second row of horizontal crossbar 7. The bolts 33 of the tap fittings 31 supporting the second row of horizontal crossbars 7 are fastened, and, thus, the second row of horizontal crossbars 7 are completely fixed.

With a similar procedure, four solar cell modules 8 are horizontally aligned, and set to be held and supported between the second row of horizontal crossbars 7 and the third row of horizontal crossbars 7.

In this manner, according to the solar cell module system 1 of this embodiment, for each structure support tool 4, one roof tile 5 is detached so that one rafter 3 is exposed, the fixing base 22 is fixed to the rafter 3, the movable portion 23 is moved and positioned, and the one roof tile is then returned to the original position and placed again. Then, the male screw portion 21c at the lower end of the coupling shaft 21 is screwed and fastened via the hole at the peak portion of the roof tile 5, the hole 24d of the washer portion 24, and the slide hole 22f of the fixing base 22 into the screw hole 23c of the movable portion 23, and, thus, the movable portion 23 is fixed, and the coupling shaft 21 is also fixed so as to be projected from the main plate 24a of the washer portion 24. Thus, the roof tile 5 can be easily disposed again, and the operation efficiency is good. Furthermore, the installing procedure is simple because only detachment and attachment of roof tiles in the same number as that of the structure support tools 4 are performed.

If the coupling shaft 21 is first fixed so as to be projected from the main plate 24a of the washer portion 24, and the coupling shaft 21 is then passed through the hole of the roof tile 5 and the roof tile 5 is placed on the rafter 3, handling of the roof tile 5 becomes difficult, and the operation efficiency for arranging the roof tile 5 again is lowered.

Furthermore, the coupling shaft 21 of the structure support tool 4 is fixed at any position above the rafter 3 or near the rafter 3. Thus, the load of the solar cell module 8 acts on a position above the rafter 3 or near the rafter 3, and is more stably supported by the rafter 3.

Moreover, the coupling shaft 21 of the structure support tool 4 passes through the hole at the peak portion of the wave-shaped roof tile 5. Thus, the hole is brought into less contact with rainwater than in the case where it is disposed at the valley portion of the wave shape, and the possibility that the hole causes leaking of rain can be significantly reduced.

Furthermore, the positions of the structure support tools 4 are optimized such that the structure support tools 4 are dispersed so as to be capable of supporting the solar cell modules 8 in a balanced manner. Thus, while the number of support positions of the solar cell modules 8 is reduced to the extent possible, the solar cell modules 8 can be firmly supported by the structure support tools 4.

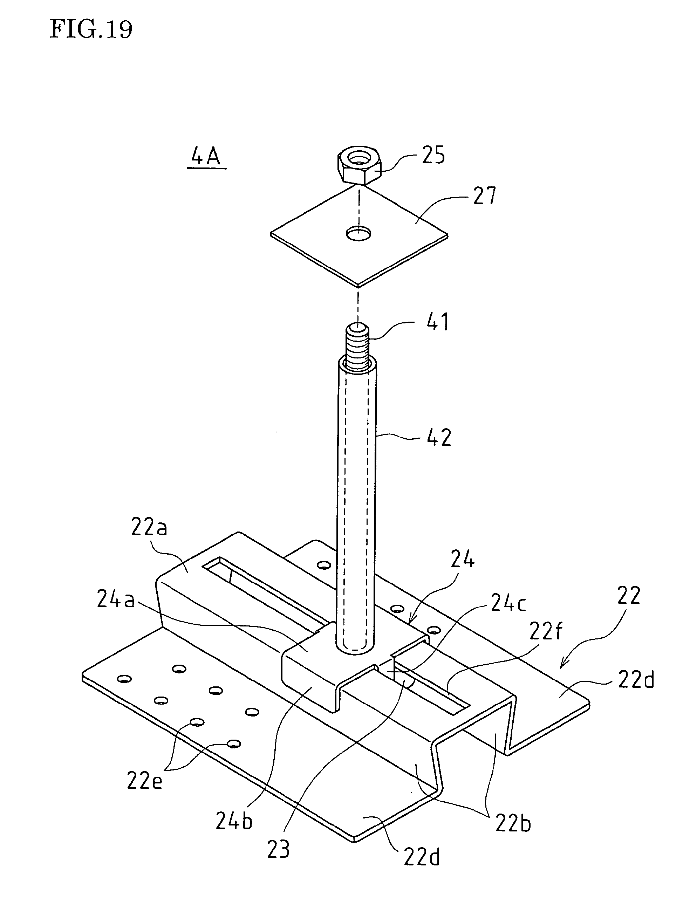

FIG. 19 is a perspective view showing a modified example of the structure support tool of FIG. 5. Here, in FIG. 19, constituent components having similar functions as those in FIG. 5 are denoted by the same reference numerals.

In a structure support tool 4A of this modified example, a male screw shaft 41 and a pipe 42 are used instead of the coupling shaft 21 in the shape of a hexagonal prism in FIG. 5. The lower end portion of the male screw shaft 41 is screwed via the hole 24d of the washer portion 24 and the slide hole 22f of the fixing base 22 into the screw hole 23c of the movable portion 23, and the male screw shaft 41 is projected from the main plate 24a of the washer portion 24. The pipe 42 is fitted to the projected male screw shaft 41, and the upper end portion of the male screw shaft 41 is projected from the upper end of the pipe 42. Then, the washer 27 is fitted to the upper end portion of the male screw shaft 41, the washer 27 is placed on the pipe 42, the upper end portion of the male screw shaft 41 is inserted into the attachment hole 6d of the main plate 6a of the vertical crossbar 6, the main plate 6a of the vertical crossbar 6 is placed on the washer 27, the nut 25 is screwed and fastened into the upper end portion of the male screw shaft 41, and, thus, the main plate 6a of the vertical crossbar 6 is held and fixed between the washer 27 and the nut 25. Also with such a structure, the vertical crossbars 6 can be attached.

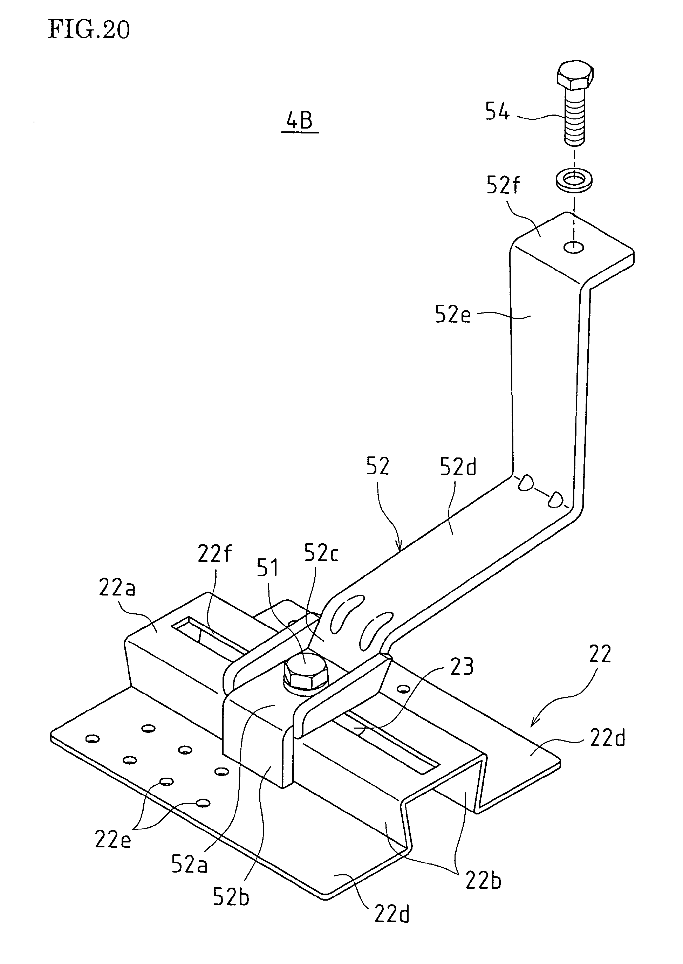

FIG. 20 is a perspective view showing a second embodiment of the structure support tool. Here, in FIG. 20, constituent components having similar functions as those in FIG. 5 are denoted by the same reference numerals.

In a structure support tool 4B of this embodiment, a short bolt 51 and a coupling portion main unit 52 are used instead of the coupling shaft 21 in the shape of a hexagonal prism in FIG. 5, and the washer portion 24 is not used. The coupling portion main unit 52 has a fixed portion 52a fixed to the fixing base 22 with the bolt 51, an engagement portion 52b bent downward at one side of the fixed portion 52a, a stepped portion 52c bent upward at the other side of the fixed portion 52a, an extended portion 52d bent at one end of the stepped portion 52c, an upright portion 52e bent at one end of the extended portion 52d, and an interlock portion 52f bent at one end of the upright portion 52e. A hole is formed through each of the fixed portion 52a and the interlock portion 52f.

In this structure support tool 4B, the fixed portion 52a of the coupling portion main unit 52 is placed on the main plate 22a of the fixing base 22, the short bolt 51 is screwed via the hole of the fixed portion 52a of the coupling portion main unit 52 and the slide hole 22f of the fixing base 22 into the screw hole 23c of the movable portion 23, and, thus, the coupling portion main unit 52 is temporarily fixed to the fixing base 22.

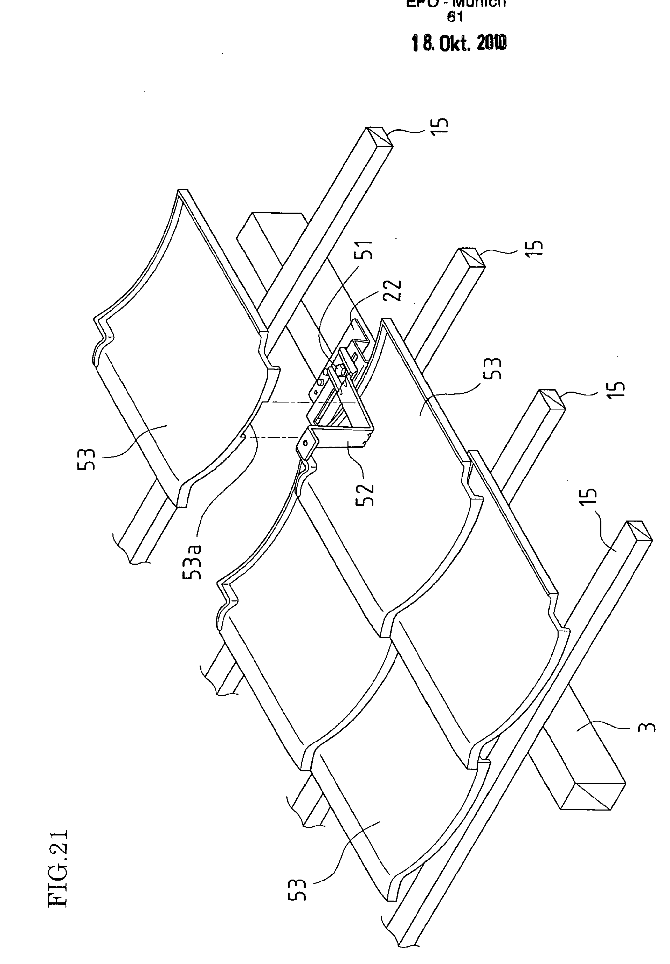

The structure support tool 4B is attached as shown in FIG. 21: one roof tile 53 is detached so that one rafter 3 is exposed, the fixing base 22 is fixed to the rafter 3, the bolt 51 is loosened, the bolt 51 and the coupling portion main unit 52 are moved along the slide hole 22f of the fixing base 22, the bolt 51 is fastened, and, thus, the bolt 51 and the coupling portion main unit 52 are fixed at any position. At that time, since the bolt 51 is fastened, the inner faces of the fixed portion 52a and the engagement portion 52b of the coupling portion main unit 52 are pressed against the main plate 22a and the side plate 22b of the fixing base 22, the lower end of the engagement portion 52b is pressed against the flange 22d of the fixing base 22, and, thus, the coupling portion main unit 52 is firmly fixed to the fixing base 22. Furthermore, the load applied to the coupling portion main unit 52 can be received in a dispersed manner in a wide range of the fixing base 22, and the load capacity is improved.

The bolt 51 and the coupling portion main unit 52 are fixed at any position as long as it is a position that overlaps the valley portion of the roof tile 53 detached in advance, and at which the height from the fixing base 22 to the valley portion of the roof tile 53 is substantially equal to the height of the extended portion 52d of the coupling portion main unit 52. When the coupling portion main unit 52 is shifted from this position, the extended portion 52d of the coupling portion main unit 52 is lower than the upper face of the roof tile 53, and it is difficult to arrange the extended portion 52d on the upper face of the roof tile 53.

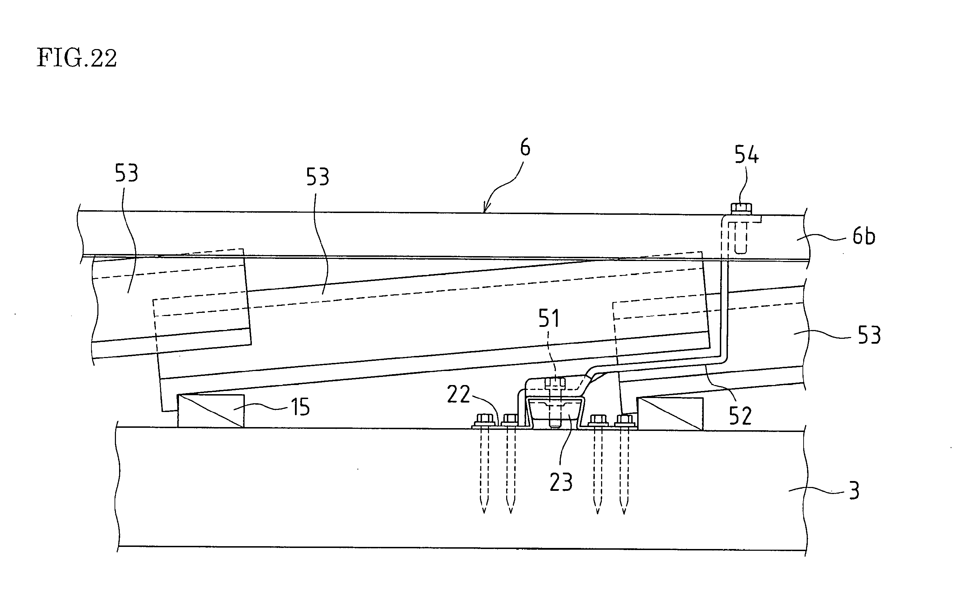

In this state, the extended portion 52d of the coupling portion main unit 52 is supported at a position higher than the fixing base 22 by the height of the stepped portion 52c, and the extended portion 52d is parallel to the roof tile 53 and overlaps the valley portion of the roof tile 53. A groove 53a to which the extended portion 52d is fitted when the roof tile 53 detached in advance is returned to the original position and placed is formed on the back face of this roof tile 53. Then, the roof tile 53 is returned to the original position and placed, and the extended portion 52d is fitted to the groove 53a on the back face of roof tile 53. As a result, as shown in FIG. 22, the extended portion 52d of the coupling portion main unit 52 is projected between two roof tiles 53 overlapping each other, and the upright portion 52e of the coupling portion main unit 52 is projected from the roof tiles 53.

With such a procedure, two coupling portion main units 52 are fixed to the rafter 3, the upright portions 52e of these coupling portion main units 52 are projected from the roof tiles 53, the interlock portions 52f of the coupling portion main units 52 are inserted to space inside the vertical crossbar 6, the vertical crossbar 6 is placed on the interlock portions 52f, the holes of these interlock portions 52f are overlapped with the attachment holes 6d of the main plate 6a of the vertical crossbar 6, washers are passed through two bolts 54, the bolts 54 are inserted via the attachment holes 6d of the vertical crossbar 6 to the holes of the respective interlock portions 52f, nuts are screwed and fastened into the lower ends of the bolts 54, and, thus, the vertical crossbar 6 is fixed.

As shown in FIGS. 1 and 2, four vertical crossbars 6 are fixed, three rows of horizontal crossbars 7 are placed across and fixed to the vertical crossbars 6, and eight solar cell modules 8 are fixed to and supported by the horizontal crossbars 7.

When such a structure support tool 4B is used, a hole does not have to be formed through a roof tile, and a portion that causes leaking of rain can be eliminated.

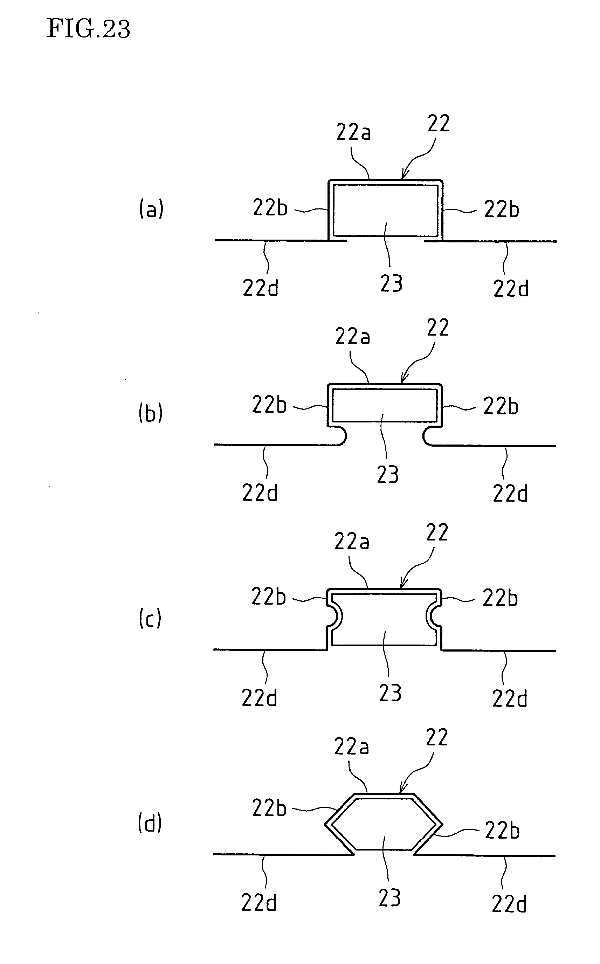

The inner shape of the side plates 22b of the fixing base 22 and the outer shape of the movable portion 23 that engage with each other can be set to various shapes. More specifically, as shown in FIG. 23A, a configuration may be adopted in which the flanges 22d of the fixing base 22 are extended inside the respective side plates 22b. Furthermore, as shown in FIG. 23B, a configuration may be adopted in which inward convex portions are formed near the lower ends of the side plates 22b of the fixing base 22, the outer shape of the movable portion 23 is rectangular, the movable portion 23 is inserted to space inside the fixing base 22, and, thus, the movable portion 23 is held so as to be capable of freely moving inside the side plates 22b of the fixing base 22 and so as not to be detached therefrom. Alternatively, as shown in FIG. 23C, a configuration may be adopted in which inward convex portions are formed at the centers of the respective side plates 22b of the fixing base 22, concave portions are formed on two sides of the movable portion 23, the inward convex portions of the side plates 22b of the fixing base 22 and the concave portions on the two sides of the movable portion 23 are caused to engage with each other, and, thus, the movable portion 23 is held so as to be capable of freely moving inside the side plates 22b of the fixing base 22 and so as not to be detached therefrom. Moreover, as shown in FIG. 23D, a configuration may be adopted in which the inner shape of the side plates 22b of the fixing base 22 is hexagonal, the outer shape of the movable portion 23 also is hexagonal, the movable portion 23 is inserted to space inside the fixing base 22, and, thus, the movable portion 23 is held so as to be capable of freely moving inside the side plates 22b of the fixing base 22 and so as not to be detached therefrom.

The present invention can be implemented in various other forms without departing from the spirit or principal features of the present invention. The embodiments described above are therefore nothing more than illustrative in every respect, and should not be interpreted in a limiting way. The scope of the present invention is defined by the scope of the claims, and should not be restricted to the foregoing description in any way. Furthermore, all variations and modifications within a scope equivalent to the scope of the claims are encompassed in the scope of the present invention.

## Claims

1. A structure support tool (4, 4A, 4B) for supporting a structure on a roof rafter, comprising:
a fixing base (22) having a main plate through which a slide hole is formed, side plates respectively bent in similar orientations at two sides of the main plate, and a flange bent outward at one side of each of the side plates;
a movable portion (23) held so as to be capable of freely moving along the slide hole of the main plate and so as to engage with inner faces of the respective side plates of the fixing base (22), between the side plates; and
a structure coupling portion connected via the slide hole of the main plate of fixing base (22) to the movable portion (23).

2. The structure support tool (4, 4A, 4B) according to claim 1, further comprising a washer portion (24) overlapped on the main plate of the fixing base (22) in a freely movable manner,
wherein the washer portion (24) has a hole for guiding the structure coupling portion to the slide hole of the main plate of the fixing base (22), and a pair of catches inserted to the slide hole of the main plate of the fixing base (22) to hold the movable portion (23).

3. The structure support tool (4, 4A, 4B) according to claim 2, wherein the washer portion (24) has holding plates (24d) for respectively holding outer faces of the side plates of the fixing base (22).

4. The structure support tool (4, 4A, 4B) according to any one of claims 1 to 3, wherein at least part of an inner shape of the side plates of the fixing base (22) and at least part of an outer shape of the movable portion (23) engage with each other, and, thus, the movable portion (23) is held so as not to be detached from space between the side plates.

5. The structure support tool (4, 4A, 4B) according to any one of claims 1 to 3,
wherein the side plates of the fixing base (22) are bent at the two sides of the main plate of the fixing base (22) such that a distance between the side plates is shorter near the flange of the fixing base (22), and
the movable portion (23) is in contact and engaged with the inner faces of the side plates of the fixing base (22).

6. The structure support tool (4, 4A, 4B) according to claim 4 or 5,
wherein the movable portion (23) has a main plate and side plates respectively bent in similar orientations at two sides of the main plate, and
in a state where the movable portion (23) is disposed between the side plates of the fixing base (22), the main plate of the movable portion (23) overlaps the main plate of the fixing base (22), and the side plates of the movable portion (23) are in orthogonal contact and engaged with the side plates of the fixing base (22).

7. The structure support tool (4, 4A, 4B) according to any one of claims 1 to 6, wherein a plurality of holes are formed only in a half region obtained by equally dividing each flange of the fixing base (22) into two along a segment orthogonal to the slide hole of the main plate of the fixing base (22).

8. The structure support tool (4A) according to any one of claims 1 to 7,
wherein the structure coupling portion is a coupling shaft (21), and a male screw is formed at one end portion of the coupling shaft (21), and
the male screw at the one end portion of the coupling shaft (21) is screwed via the slide hole of the main plate of the fixing base (22) into a screw hole of the movable portion (23), and, thus, the coupling shaft (21) is connected to the movable portion (23), and the movable portion (23) is fixed to the fixing base (22).

9. The structure support tool (4A) according to any one of claims 1 to 8,
wherein the structure coupling portion has a male screw shaft (41) and a pipe (42) through which the male screw shaft (41) is passed,
the male screw shaft (41) is passed through the pipe (42), one end portion of the male screw shaft (41) is screwed via the slide hole of the main plate of the fixing base (22) into a screw hole of the movable portion (23), and, thus, the male screw shaft (41) is connected to the movable portion (23), and the movable portion (23) is fixed to the fixing base (22).

10. The structure support tool (4B) according to any one of claims 1 to 5,
wherein the structure coupling portion has a coupling portion main unit (52) and a bolt (51) connecting the coupling portion main unit to the movable portion (23),
the bolt (51) is screwed via a hole of the coupling portion main unit (52) and the slide hole of the main plate of the fixing base (22) into a screw hole of the movable portion (23), and, thus, the bolt (51) and the coupling portion main unit (52) are connected to the movable portion (23), and the movable portion (23) is fixed to the fixing base (22).

11. The structure support tool (4B) according to claim 10, wherein the coupling portion main unit (52) has a portion shaped so as to be bent along the main plate and the side plate of the fixing base (22) and in contact with the flange of the fixing base (22) when connected to the movable portion (23) with the bolt (51).

12. The structure support tool (4, 4A, 4B) according to any one of claims 1 to 11, wherein the structure is a solar cell module (8) or a support member of a solar cell module.

13. A structure installing method for supporting a structure on a roof using the structure support tool (4, 4A, 4B) according to any one of claims 1 to 12, comprising the steps of
placing and fixing each flange of the fixing base (22) of the structure support tool (4, 4A, 4B) on a roof rafter;
moving the movable portion (23) between the side plates of the fixing base (22) along the slide hole of the fixing base (22), thereby positioning the movable portion (23);
forming a hole through a roof tile (5), and placing the roof tile (5) on the rafter such that the hole of the roof tile (5) overlaps the movable portion (23); and
connecting and fixing the structure coupling portion of the structure support tool (4, 4A, 4B) via the hole of the roof tile (5) and the slide hole of the fixing base (22) to the movable portion (23).

14. The structure installing method according to claim 13, wherein the hole of the roof tile (5) is formed through a peak portion of a wave-shaped roof tile (5).

15. A solar cell module system (1), comprising the structure support tool (4, 4A, 4B) according to any one of claims 1 to 12.
